# EUROPEAN PATENT APPLICATION

(11) **EP 4 742 745 A1**
(43) Date of publication of application: **13.05.2026**
(21) Application number: 24211756.2
(22) Date of filing: 08.11.2024
(51) Int. Cl.: H04W 28/22

(54) **A SCHEDULER PREVENTING A DISTRIBUTED REAL-TIME APPLICATION FROM FREEZING**

(71) Applicant: Deutsche Telekom AG, 53113 Bonn (DE)
(72) Inventor: SCHNIEDERS, Dominik, 52078 Aachen (DE)
(74) Representative: RDL Patentanwälte PartG mbB

(57) **Abstract**

A method for operating a scheduler of an access point of a radio access network, RAN, wherein a distributed real-time application transmits a functional minimum data rate of the distributed real-time application to a scheduler of an access point of a RAN, the access point forwarding data packets transmitted by the distributed real-time application via a wireless connection provided by the access point; the scheduler successively signals determined target bitrates to the distributed real-time application and the distributed real-time application dynamically adjusts a data rate of the transmitted data packets at an offset below the signaled target bitrates; the scheduler measures the offset and normally determines a target bitrate at the measured offset above a determined best effort bitrate for the wireless connection; and the scheduler exceptionally determines the target bitrate to be a minimum target bitrate when the normally determined target bitrate is lower than the exceptionally determined minimum target bitrate, the minimum target bitrate being determined at the measured offset above the transmitted functional minimum data rate; an access point for a RAN, a RAN and a computer program product.

## Description

The invention relates to a method for operating a scheduler of an access point of a radio access network, RAN, wherein a distributed real-time application transmits a functional minimum data rate of the distributed real-time application to a scheduler of an access point of a RAN, the access point forwarding data packets transmitted by the distributed real-time application via a wireless connection provided by the access point; the scheduler successively signals determined target bitrates to the distributed real-time application and the distributed real-time application dynamically adjusts a data rate of the transmitted data packets at an offset below the signaled target bitrates; the scheduler measures the offset and normally determines a target bitrate at the measured offset above a determined best effort bitrate for the wireless connection; and the scheduler exceptionally determines the target bitrate to be a minimum target bitrate when the normally determined target bitrate is lower than the minimum target bitrate, the minimum target bitrate being determined at the measured offset above the transmitted functional minimum data rate. The invention further relates to an access point for a RAN, a RAN and a computer program product.

Methods of the above-mentioned type are known in the state of the art and are used to provide distributed real-time applications with a low and stable latency of the wireless connection. The latency herein indicates an unavoidable transmission delay related to the wireless connection. A stability of the latency corresponds to a low volatility of the latency wherein the volatility of the latency is usually referred to as a jitter.

For instance, the scheduler may signal the target bitrate indirectly by applying a low latency low loss scalable throughput, L4S, algorithm to a queue controlled by the scheduler. The L4S algorithm is specified by RFC 9330 and uses an explicit congestion notification, ECN, protocol exploiting bits of an internet protocol, IP, header of the data packets for signaling a filling level of the queue.

In greater detail, a sender of the distributed real-time application transmits the data packets via the wireless connection at the data rate, the data rate immediately depending on a size and an incidence, i.e. a frequency of the transmitted data packets. The scheduler provides a percentage of the transmitted data packets with a mark, the percentage indicating the filling level of the queue. A receiver of the distributed real-time application receives the transmitted data packets, measures the percentage of received marked data packets and causes the sender to reduce the data rate until few or no more marked data packets are received. Alternatively the target bitrate may be signaled directly via an application programming interface, API, of the distributed real-time application.

The determined best effort bitrate takes into account competing distributed applications connected to the access node and simultaneously transmitting data packets via respective wireless connections.

The sender is executed by a first node and the receiver is executed by a second node remote from the first node, the sender and the receiver transmitting data packets via the wireless connection. Alternatively, the first node may execute the receiver while the second node may execute the sender. Of course, the first node and the second node may also alternate in executing the sender and the receiver, respectively, during execution of the distributed real-time application.

The distributed real-time application, herein, may also be a near-real-time application and requires a low and stable latency in order to function properly. Autonomous driving, online gaming and video calling are exemplary distributed real-time applications.

The real-time application defines a minimum functional data rate being a data rate allowing just a minimum function of the distributed real-time application. In other words, the distributed real-time application does not function at data rates below the functional minimum data rate. In case the data rate falls below the functional minimum data rate the real-time application freezes, i.e., at least temporarily stops functioning.

Thus, the scheduler generally determines the target bitrates at the measured offset above the transmitted minimum functional minimum data rate in order to reliably prevent the data rate to be adjusted below the functional minimum data rate and the distributed real-time application from freezing. While, by doing so, the scheduler ensures the distributed real-time application to function properly, the scheduler might eventually disadvantage further wireless connections of competing distributed applications temporarily.

The distributed real-time application may provide an application programming interface, API, to be connected to by the scheduler, the functional minimum data rate being transmitted via the API.

However, the distributed real-time application may temporarily adjust the data rate more than the offset below the signaled target bitrate when the signaled target bitrate suddenly and strongly decreases, i.e., drops at a high rate and by a large amount due to the best effort bitrate suddenly and strongly decreasing. In other words, the distributed real-time application initially exaggerates in adjusting the data rate following the dropping signaled bitrate and only thereafter reduces the exaggeration to zero smoothly. Such a behavior of the distributed real-time application is, herein, called a transient response of the distributed real-time application.

Due to the transient response the data rate is temporarily adjusted below the functional minimum of the distributed real-time application even if the signaled target bitrate does not fall below the determined minimum target bitrate. As a consequence, just the transient response of the distributed real-time application may cause the distributed real-time application to freeze when the signaled target bitrate drops at a high rate and by a large amount.

It is, therefore, an object of the invention to suggest a method for operating a scheduler of an access point of a RAN which reliably prevents the distributed real-time application from freezing when the best effort bitrate suddenly and strongly decreases. Further objects of the inventions are to provide an access point for a RAN, a RAN and a computer program product.

One aspect of the invention is a method for operating a scheduler of an access point of a radio access network, RAN, wherein a distributed real-time application transmits a functional minimum data rate of the distributed real-time application to a scheduler of an access point of a RAN, the access point forwarding data packets transmitted by the distributed real-time application via a wireless connection provided by the access point; the scheduler successively signals determined target bitrates to the distributed real-time application and the distributed real-time application dynamically adjusts a data rate of the transmitted data packets at an offset below the signaled target bitrates; the scheduler measures the offset and normally determines a target bitrate at the measured offset above a determined best effort bitrate for the wireless connection; and the scheduler exceptionally determines the target bitrate to be a minimum target bitrate when the normally determined target bitrate is lower than the minimum target bitrate, the minimum target bitrate being determined at the measured offset above the transmitted functional minimum data rate. Whenever available spectral resources of the access point are sufficient for supporting the functional minimum data rate of the distributed real-time application the signaled target bitrate is never lower than the determined minimum target bitrate, particularly not even if the best effort bitrate would normally cause the signaled target bitrate to be lower than at an offset above the functional minimum data rate. Thus, the wireless connection generally provides a low and stable latency. However, the distributed real-time application may still freeze when the best effort bitrate and, consequently, the signaled target bitrate suddenly and strongly decrease causing a transient response of the distributed real-time application.

According to the invention, the scheduler further determines a maximum transient response amplitude of the data rate falling below a signaled target bitrate and signals a sequence of consecutively determined transitory target bitrates gradually decreasing from a most recent normally determined target bitrate to the minimum target bitrate when the determined maximum transient response amplitude exceeds the measured offset. For short, the scheduler strictly avoids signaling a suddenly and strongly decreasing target bitrate and instead signals a sequence of transitory target bitrates decreasing step-wise towards the exceptionally determined target bitrate. Each step of the signaled transitory target bitrates can be chosen sufficiently small for reliably precluding a large transient response of the distributed real-time application.

The determined maximum response amplitude indicates a strength of the transient response of the distributed real-time application. The scheduler signals transitory target bitrates only when the determined maximum response amplitude exceeds the offset, i.e., when the measured offset is insufficient for reliably having the data rate adjusted at or above the functional minimum data rate. When, in contrast, the determined maximum transient amplitude is smaller than the measured offset, a transient response of the distributed real-time application does not cause the data rate to be adjusted below the functional minimum data rate.

Without a transient response larger than the offset, the distributed real-time application does not adjust the data rate below the functional minimum and, hence, does not freeze.

Preferably, determining the maximum transient response amplitude comprises calculating a data rate difference of a data rate corresponding to the minimum target bitrate from a data rate corresponding to the most recent signaled target bitrate and multiplying the calculated data rate difference with a transient response factor determined using a lookup table created by the scheduler, each row of the lookup table comprising a target bitrate difference and a transient response factor associated with the target bitrate difference. It is noted that the data rate difference at least substantially equals the target bitrate difference as a difference between the target bitrate and the data rate is the normally constant offset. The lookup table reflects a transient response behavior of the distributed real-time application wherein the transient response factor is typically larger for larger target bitrate differences and smaller for smaller target bitrate differences.

Determining the transient response factor may comprise immediately retrieving the transient response factor from the lookup table when the lookup table comprises a row with the target bitrate difference. Once the lookup table has been created the scheduler is released from complicated estimations of the transient response behavior of the distributed real-time application while scheduling the data packets. Immediately retrieving the transient response factor from the lookup table allows the scheduler for a real-time or near-real time estimation of the transient response behavior of the distributed real-time application.

Determining the transient response factor may alternatively comprise linearly interpolating the transient response factor from retrieved transient response factors of at least two rows of the lookup table when the lookup table does not comprise a row with the target bitrate difference. As the lookup table only has discrete entries, i.e., is different from a continuous function, a current target bitrate difference often does not match an entry of the lookup table. The lookup table, however, has two entries nearest to the current target bitrate difference and enclosing the current target bitrate difference. The current transient response factor may be obtained by linearly interpolating the transient response factors of the two entries. Calculating the interpolated transient response factor is very easy and hardly affects a real-time behavior of the scheduler.

Advantageously, the scheduler creates the lookup table by successively signaling a plurality of pairs of respective first target bitrates and second target bitrates and, for each pair, measuring a first data rate of the application at the signaled first target bitrate and a lowest second data rate of the application after signaling the second target bitrate, calculating a target bitrate difference of the second target bitrate from the first target bitrate, a data rate difference of the lowest second data rate of the application from the first data rate of the application and the transient response factor as a ratio of the data rate difference over the target bitrate difference, and adding the calculated target bitrate difference and the calculated transient factor to the lookup table as a row of the lookup table. The calculated data rate difference is larger than the calculated target bitrate difference due to the transient response of the distributed real-time application. In other words, the lowest second data rate is lower than the second target bitrate decreased by the offset.

Each determined transitory target bitrate may be signaled at a determined delay after a recently signaled transitory target bitrate. The determined delay defines a width of the steps and indirectly a number of the transitory target bitrates needed for approaching the minimum target bitrate.

The scheduler preferably determines the delay as a time interval from signaling a transitory target bitrate to measuring a successive lowest data rate of the distributed real-time application. The scheduler beneficially uses the transient response behavior of the distributed real-time application in order to reach the minimum target bitrate applying as few steps, i.e., transitory target bitrates as possible.

The signaled sequence of transitory target bitrates may end when the recently signaled transitory target bitrate equals the functional minimum data rate increased by the measured offset. In other words, the signaled sequence of transitory target bitrates ends when the signaled target bitrate has reached the minimum target bitrate.

Advantageously, the scheduler determines each transitory target bitrate lower than or equaling the best effort bitrate increased by the measured offset. Accordingly, the distributed real-time application actually uses the best effort bitrate at most. By applying this restriction, the scheduler generally protects competing distributed applications from being adversely affected by the distributed real-time application. The restriction particularly applies to determining the first transitory target bitrate of the sequence and may cause the first transitory target bitrate to exceptionally be determined higher than without the restriction. Furthermore, the restriction may cause the sequence to have an extra transitory target bitrate, i.e., to be longer. However, the scheduler does not strictly enforce the restriction and may exceptionally accept an adverse affection of the competing distributed application in favor of the distributed real-time application.

The scheduler preferably determines the target bitrate as an output bitrate of a virtual queue defined by the scheduler. The virtual queue is different from a real queue of the wireless connection and only mathematically models a waiting time of the transmitted data packets. The virtual queue is defined by a size, an input bitrate, i.e. the data rate of the distributed real-time application and an output bitrate, i.e., the signaled target bitrate decreased by the measured offset, as parameters. Different from the real queue, the scheduler may adjust the parameters of the virtual queue to dynamically deviate from the real queue. Thus, the virtual queue may suffer from a rising congestion while the real queue still does not.

In an embodiment, the scheduler determines the best effort bitrate based on a fair allocation of spectral resources of the access point and on radio conditions of the wireless connection. The determined best effort bitrate ensures a fair distribution of available spectral resources of the access point among all competing distributed applications, i.e., a fair distribution of a total spectral capacity of the access point.

Determining the best effort bitrate particularly may comprise assigning a priority to the transmitted data packets, allocating spectral resources to the wireless connection corresponding to the assigned priority and determining a priority bitrate dependent on the allocated spectral resources and on radio conditions of the wireless connection. The assigned priority creates a headroom for the distributed real-time application.

The scheduler may assign an absolute priority or a relative priority to the transmitted data packets. The absolute priority causes the transmitted data packets to precede any data packets transmitted via different simultaneous wireless connections. Alternatively, the relative priority may depend on the fair allocation of the spectral resources. The priority bitrate may particularly be determined allocating twice or any integer times the fair spectral resources, particularly three times, four times or five times the fair spectral resources. The distributed real-time application is virtually treated as two identical distributed real-time applications using the wireless connection. In case a plurality of wireless connections is simultaneously provided by the access point, the further wireless connections are not substantially disadvantaged by the assigned relative priority.

Another object of the invention is an access point for a radio access network, RAN, comprising a computing device executing a scheduler. The computing device of the access point is configured for creating a radio cell surrounding an antenna connected to the access point.

According to the invention, the scheduler is configured for carrying out a method according to an embodiment of the invention together with a distributed real-time application. The scheduler is configured for fairly, efficiently and sufficiently scheduling data packets transmitted by the distributed real-time application via a wireless connection provided by the access point and for reliably preventing the distributed real-time application from freezing even when the best effort bitrate suddenly and strongly decreases. The access point may be configured as a base transceiver station, BTS, of a cellular network or as a wide area local network, WLAN, access point of a WLAN.

A third object of the invention is a radio access network, RAN, comprising an access point. The RAN usually comprises a large plurality of access points.

According to the invention, the access point is an access point according to the invention. Due to the inventive access point, the RAN effectively and fairly supports distributed real-time applications. The access point reliably prevents the distributed real-time applications from a freezing due to its transient response behavior.

A fourth object of the invention is a computer program product comprising a digital storage media with a program code. The digital storage medium is chosen from the group comprising a compact disk, CD, a digital versatile disk, DVD, a hard disk, HD, a random access memory, RAM, chip, a universal serial bus, USB, stick, a cloud storage and the like.

According to the invention, the program code causes a computing device to operate a scheduler cooperating with a distributed real-time application in a method according to an embodiment of the invention when being executed by a processor of the computing device. The computer program product allows for implementing an inventive access point of a RAN, i.e., for setting up the scheduler on the computing device, the computing device being comprised by the access point.

An essential advantage of the inventive method is that the distributed real-time application is reliably prevented from freezing even when the best effort bitrate suddenly and strongly decreases.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.
- Fig. 1: schematically shows a radio access network, RAN, according to an embodiment of the invention;
- Fig. 2: schematically shows a graph displaying a time behavior of relevant rates and a latency of a wireless connection scheduled by a scheduler of an access point of the RAN shown in fig. 1, the scheduler being operated in a method according to an embodiment of the invention;
- Fig. 3: schematically shows an enlarged detail of the graph shown in fig. 2.

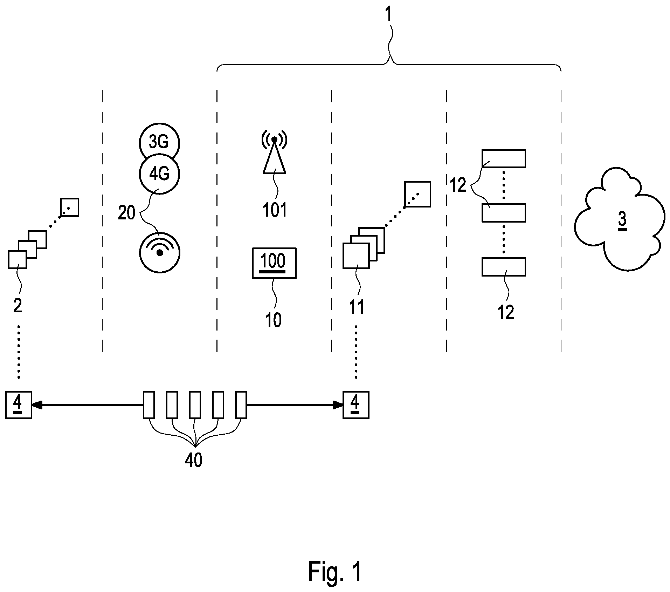

Fig. 1 schematically shows a radio access network, RAN, 1 according to an embodiment of the invention. The RAN 1 comprises at least one access point 10 according to an embodiment of the invention and an antenna 101 connected to the access point 10, generally a plurality of access points with respective connected antennas. Exemplarily, the radio access network 1 is configured as a cellular network, and the at least one access point 10 is configured as a base transceiver station, BTS. Alternatively, the radio access network 1 may be configured as a wide local area network, WLAN, and the at least one access point 10 may be a WLAN access point.

The radio access network 1 may further comprise an edge data center 11 adjacent and connected to the at least one access point 10 and a backbone 12 the edge data center 11 is connected to. An internet 3 may be connected to the backbone 12.

At least one terminal device 2, e.g., a smartphone, a tablet, a notebook and the like, generally a plurality of terminal devices 2, may be connected to the at least one access point 10 via a wireless connection 20 provided by the at least one access point 10. The terminal device 2 may comprise a sender of a distributed real-time application 4. The edge data center 11 may comprise a receiver of the distributed real time application 4. Alternatively, the terminal device 2 may comprise the receiver of the distributed real-time application 4, and the edge data center 11 may comprise the sender of the distributed real-time application 4. The sender of the distributed real-time application is configured for transmitting data packets 40 via the wireless connection 20 to the receiver of the distributed real-time application 4.

The at least one access point 10 comprises a scheduler 100, more precisely a computing device being configured for operating the scheduler 100. The computing device is particularly configured by means of a computer program product comprising a digital storage medium storing a program code. The program code causes the computing device to operate the scheduler 100 cooperating with the distributed real-time application 4 in a method according to an embodiment of the invention when being executed by a processor of the computing device.

The scheduler 100 of the access point 10 of the radio access network, RAN, 1 carries out the following method in cooperation with the distributed real-time application 4 when being operated.

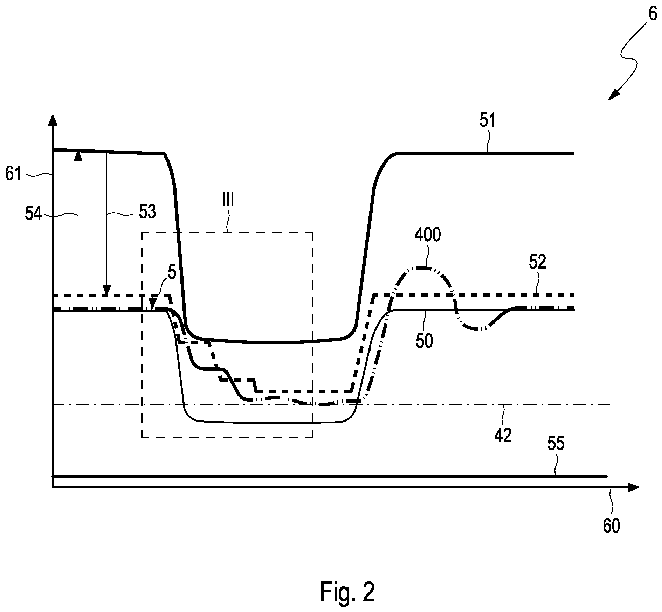

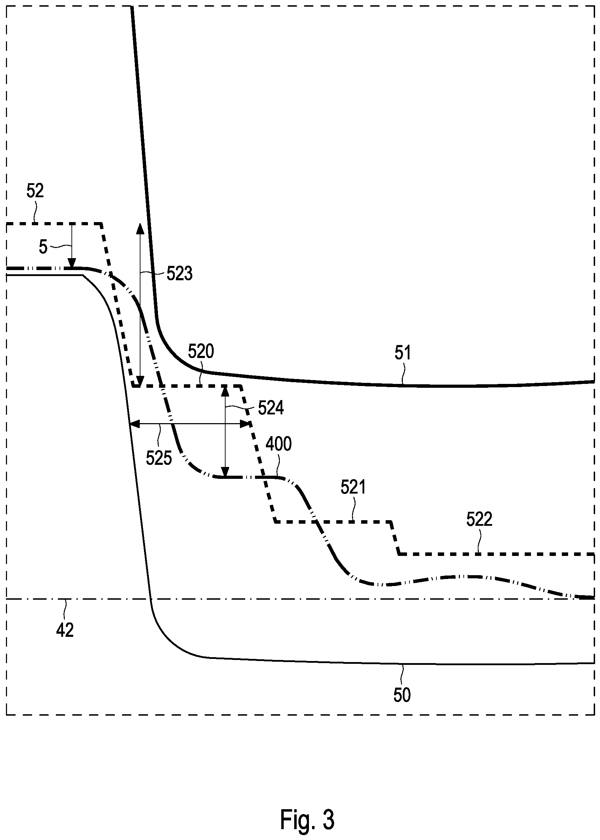

The distributed real-time application 4 transmits a functional minimum data rate 42 (see below, figs. 2 and 3) of the distributed real-time application 4 to the scheduler 100 of the access point 10 of the RAN 1. The access point 10 forwards data packets 40 transmitted by the distributed real-time application 4 via the wireless connection 20 provided by the access point 10. Exemplarily, a base transceiver station, BTS, of a cellular network as the RAN 1 provides the wireless connection 20 as the access point 10. Alternatively, the access point 10 may be configured as a wide area local network, WLAN, access point of a WLAN.

Fig. 2 schematically shows a graph 6 displaying a time behavior of relevant rates, i.e., a data rate 400 of the distributed real-time application 4 and bitrates 50, 51, 52 of the wireless connection 20, and a latency 55 of the wireless connection scheduled by the scheduler of the access point of the RAN shown in fig. 1, the scheduler being operated in a method according to an embodiment of the invention and cooperating with the distributed real-time application 4. An abscissa 60 of the graph 6 indicates a time in seconds. An ordinate 61 of the graph 6 indicates values of both the relevant rates in Megabits per second, Mbps, and the latency 55 of the wireless connection 20 in ms.

The scheduler 100 successively signals determined target bitrates 52 to the distributed real-time application 4 and the distributed real-time application 4 dynamically adjusts a data rate 400 of the transmitted data packets 40 at an offset 5 below the signaled target bitrates 52.

The scheduler 100 measures the offset 5 and normally determines a target bitrate 52 at the measured offset 5 above a determined best effort bitrate 50 for the wireless connection 20. The scheduler 100 preferably determines the best effort bitrate 50 based on a fair allocation of spectral resources of the access point 10 and on radio conditions of the wireless connection 20. Determining the best effort bitrate 50 preferably comprises assigning a priority to the transmitted data packets 40, allocating spectral resources to the wireless connection 20 corresponding to the assigned priority and determining a priority bitrate 51 dependent on the allocated spectral resources and on radio conditions of the wireless connection 20. By determining the priority bitrate 51, the scheduler 100 creates a virtual link capacity 54 for the distributed real-time application 4 resulting in a headroom 53 to be potentially used by the distributed real-time application 4.

The scheduler 100 exceptionally determines the target bitrate 52 to be a minimum target bitrate 52 when the normally determined target bitrate 52 is lower than the minimum target bitrate 52, the minimum target bitrate 52 being determined at the measured offset 5 above the transmitted functional minimum data rate 42.

The scheduler 100 further determines a maximum transient response amplitude of the data rate 400 falling below a signaled target bitrate 52 and signals a sequence of consecutively determined transitory target bitrates 520, 521, 522 (see fig. 3) gradually decreasing from a most recent normally determined target bitrate 52 to the minimum target bitrate 52 when the determined maximum transient response amplitude exceeds the measured offset 5. Two successive transitory target bitrates have respective differences 523 wherein the differences 523 usually decrease along the sequence.

Determining the maximum transient response amplitude may comprise calculating a data rate difference of a data rate 400 corresponding to the minimum target bitrate 52 from a data rate 400 corresponding to the most recent signaled target bitrate 52 and multiplying the calculated data rate difference with a transient response factor determined using a lookup table created by the scheduler 100, each row of the lookup table comprising a target bitrate difference and a transient response factor associated with the target bitrate difference.

Determining the transient response factor preferably comprises immediately retrieving the transient response factor from the lookup table when the lookup table comprises a row with the target bitrate difference.

Determining the transient response factor may alternatively comprise linearly interpolating the transient response factor from transient response factors of at least two rows of the lookup table when the lookup table does not comprise a row with the target bitrate difference.

The scheduler 100 may create the lookup table by successively signaling a plurality of pairs of respective first target bitrates 52 and second target bitrates 52 and, for each pair, measuring a first data rate of the application 4 at the signaled first target bitrate 52 and a lowest second data rate of the application 4 after signaling the second target bitrate 52, calculating a target bitrate difference of the second target bitrate 52 from the first target bitrate 52, a data rate difference of the lowest second data rate of the application 4 from the first data rate of the application 4 and the transient response factor as a ratio of the data rate difference over the target bitrate difference, and adding the calculated bitrate difference and the calculated transient factor to the lookup table as a row of the lookup table.

Each determined transitory target bitrate 520, 521, 522 is preferably signaled at a determined delay 525 (see fig. 3) after a recently signaled transitory target bitrate 520, 521, 522. The scheduler 100 may determine the delay 525 as a time interval from signaling a transitory target bitrate 520, 521, 522 to measuring a successive lowest data rate 524 (see fig. 3) of the distributed real-time application 4.

The signaled sequence of transitory target bitrates 520, 521, 522 preferably ends when the recently signaled transitory target bitrate 520, 521, 522 equals the functional minimum data rate increased by the measured offset.

The scheduler 100 favorably determines each transitory target bitrate 520, 521, 522 lower than or equaling the best effort bitrate increased by the measured offset.

The scheduler 100 may determine the target bitrate 52 as an output bitrate of a virtual queue defined by the scheduler 100.

Fig. 3 schematically shows an enlarged detail of the graph 6 shown in fig. 2.

### Reference Numerals

- 1: radio access network
- 10: access point
- 100: scheduler
- 101: antenna
- 11: edge data center
- 12: backbone
- 2: terminal device
- 20: wireless connection
- 3: internet
- 4: distributed real-time application
- 40: data packet
- 400: data rate
- 42: functional minimum data rate
- 5: offset
- 50: best effort bitrate
- 51: priority bitrate
- 52: target bitrate
- 520: transitory target bitrate
- 521: transitory target bitrate
- 522: transitory target bitrate
- 523: difference of successively signaled transitory target bitrates
- 524: successive lowest data rate
- 525: delay
- 53: headroom
- 54: virtual priority gain
- 55: latency
- 6: graph
- 60: abscissa
- 61: ordinate

## Claims

1. A method for operating a scheduler (100) of an access point (10) of a radio access network, RAN, (1), wherein
- a distributed real-time application (4) transmits a functional minimum data rate (42) of the distributed real-time application (4) to a scheduler (100) of an access point (10) of a RAN (1), the access point (10) forwarding data packets (40) transmitted by the distributed real-time application (4) via a wireless connection (20) provided by the access point (10);
- the scheduler (100) successively signals determined target bitrates (52) to the distributed real-time application (4) and the distributed real-time application (4) dynamically adjusts a data rate (400) of the transmitted data packets (40) at an offset (5) below the signaled target bitrates (52);
- the scheduler (100) measures the offset (5) and normally determines a target bitrate (52) at the measured offset (5) above a determined best effort bitrate (50) for the wireless connection (20);
- the scheduler (100) exceptionally determines the target bitrate (52) to be a minimum target bitrate (52) when the normally determined target bitrate (52) is lower than the minimum target bitrate (52), the minimum target bitrate (52) being determined at the measured offset (5) above the transmitted functional minimum data rate (42);
- the scheduler (100) further determines a maximum transient response amplitude of the data rate (400) falling below a signaled target bitrate (52) and signals a sequence of consecutively determined transitory target bitrates (520, 521, 522) gradually decreasing from a most recent normally determined target bitrate (52) to the minimum target bitrate (52) when the determined maximum transient response amplitude exceeds the measured offset (5).

2. The method according to claim 1, wherein the scheduler (100) determines the best effort bitrate (50) based on a fair allocation of spectral resources of the access point (10) and on radio conditions of the wireless connection (20).

3. The method according to claim 1 or 2, wherein determining the maximum transient response amplitude comprises calculating a data rate difference of a data rate (400) corresponding to the minimum target bitrate (52) from a data rate (400) corresponding to the most recent signaled target bitrate (52) and multiplying the calculated data rate difference with a transient response factor determined using a lookup table created by the scheduler (100), each row of the lookup table comprising a target bitrate difference and a transient response factor associated with the target bitrate difference.

4. The method according to claim 3, wherein determining the transient response factor comprises immediately retrieving the transient response factor from the lookup table when the lookup table comprises a row with the target bitrate difference.

5. The method according to claim 3 or 4, wherein determining the transient response factor comprises linearly interpolating the transient response factor from transient response factors of at least two rows of the lookup table when the lookup table does not comprise a row with the target bitrate difference.

6. The method according to one of claims 3 to 5, wherein the scheduler (100) creates the lookup table by successively signaling a plurality of pairs of respective first target bitrates (52) and second target bitrates (52) and, for each pair, measuring a first data rate of the application (4) at the signaled first target bitrate (52) and a lowest second data rate of the application (4) after signaling the second target bitrate (52), calculating a target bitrate difference of the second target bitrate (52) from the first target bitrate (52), a data rate difference of the lowest second data rate of the application (4) from the first data rate of the application (4) and the transient response factor as a ratio of the data rate difference over the target bitrate difference, and adding the calculated bitrate difference and the calculated transient factor to the lookup table as a row of the lookup table.

7. The method according to one of claims 1 to 6, wherein each determined transitory target bitrate (520, 521, 522) is signaled at a determined delay (525) after a recently signaled transitory target bitrate (520, 521, 522).

8. The method according to claims 1 to 7, wherein the scheduler (100) determines the delay (525) as a time interval from signaling a transitory target bitrate (520, 521, 522) to measuring a successive lowest data rate of the distributed real-time application (4).

9. The method according to one of claims 1 to 8, wherein the signaled sequence of transitory target bitrates (520, 521, 522) end when the recently signaled transitory target bitrate (520, 521, 522) equals the functional minimum data rate increased by the measured offset.

10. The method according to one of claims 1 to 9, wherein the scheduler (100) determines each transitory target bitrate (520, 521, 522) lower than or equaling the best effort bitrate increased by the measured offset.

11. The method according to one of claims 1 to 10, wherein the scheduler (100) determines the target bitrate (52) as an output bitrate of a virtual queue defined by the scheduler (100).

12. The method according to one of claims 1 to 11, wherein determining the best effort bitrate (50) comprises assigning a priority to the transmitted data packets (40), allocating spectral resources to the wireless connection (20) corresponding to the assigned priority and determining a priority bitrate (51) dependent on the allocated spectral resources and on radio conditions of the wireless connection (20).

13. An access point (10) for a radio access network, RAN, comprising a computing device executing a scheduler (100) configured for carrying out a method according to one of claims 1 to 12. together with a distributed real-time application (4).

14. A radio access network, RAN, comprising an access point (10) according to claim 13.

15. A computer program product, comprising a digital storage media with a program code, the program code causing a computing device to operate a scheduler (100) cooperating with a distributed real-time application (4) in a method according to one of claims 1 to 12 when being executed by a processor of the computing device.

## Amended claims

### Amended claims in accordance with Rule 137(2) EPC.

1. A method for operating a scheduler (100) of an access point (10) of a radio access network, RAN, (1), wherein
- a distributed real-time application (4) transmits a functional minimum data rate (42) of the distributed real-time application (4) to a scheduler (100) of an access point (10) of a RAN (1), the access point (10) forwarding data packets (40) transmitted by the distributed real-time application (4) via a wireless connection (20) provided by the access point (10);
- the scheduler (100) successively signals determined target bitrates (52) to the distributed real-time application (4) and the distributed real-time application (4) dynamically adjusts a data rate (400) of the transmitted data packets (40) at an offset (5) below the signaled target bitrates (52);
- the scheduler (100) measures the offset (5) and normally determines a target bitrate (52) at the measured offset (5) above a determined best effort bitrate (50) for the wireless connection (20);
- the scheduler (100) exceptionally determines the target bitrate (52) to be a minimum target bitrate (52) when the normally determined target bitrate (52) is lower than the minimum target bitrate (52), the minimum target bitrate (52) being determined at the measured offset (5) above the transmitted functional minimum data rate (42);
- the scheduler (100) further determines a maximum transient response amplitude of the data rate (400) falling below a signaled target bitrate (52) and signals a sequence of consecutively determined transitory target bitrates (520, 521, 522) gradually decreasing from a most recent normally determined target bitrate (52) to the minimum target bitrate (52) when the determined maximum transient response amplitude exceeds the measured offset (5).

2. The method according to claim 1, wherein the scheduler (100) determines the best effort bitrate (50) based on a fair allocation of spectral resources of the access point (10) and on radio conditions of the wireless connection (20).

3. The method according to claim 1 or 2, wherein determining the maximum transient response amplitude comprises calculating a data rate difference of a data rate (400) corresponding to the minimum target bitrate (52) from a data rate (400) corresponding to the most recent signaled target bitrate (52) and multiplying the calculated data rate difference with a transient response factor determined using a lookup table created by the scheduler (100), each row of the lookup table comprising a target bitrate difference and a transient response factor associated with the target bitrate difference.

4. The method according to claim 3, wherein determining the transient response factor comprises immediately retrieving the transient response factor from the lookup table when the lookup table comprises a row with the target bitrate difference.

5. The method according to claim 3 or 4, wherein determining the transient response factor comprises linearly interpolating the transient response factor from transient response factors of at least two rows of the lookup table when the lookup table does not comprise a row with the target bitrate difference.

6. The method according to one of claims 3 to 5, wherein the scheduler (100) creates the lookup table by successively signaling a plurality of pairs of respective first target bitrates (52) and second target bitrates (52) and, for each pair, measuring a first data rate of the application (4) at the signaled first target bitrate (52) and a lowest second data rate of the application (4) after signaling the second target bitrate (52), calculating a target bitrate difference of the second target bitrate (52) from the first target bitrate (52), a data rate difference of the lowest second data rate of the application (4) from the first data rate of the application (4) and the transient response factor as a ratio of the data rate difference over the target bitrate difference, and adding the calculated bitrate difference and the calculated transient factor to the lookup table as a row of the lookup table.

7. The method according to one of claims 1 to 6, wherein each determined transitory target bitrate (520, 521, 522) is signaled at a determined delay (525) after a recently signaled transitory target bitrate (520, 521, 522).

8. The method according to claims 1 to 7, wherein the scheduler (100) determines the delay (525) as a time interval from signaling a transitory target bitrate (520, 521, 522) to measuring a successive lowest data rate of the distributed real-time application (4).

9. The method according to one of claims 1 to 8, wherein the signaled sequence of transitory target bitrates (520, 521, 522) end when the recently signaled transitory target bitrate (520, 521, 522) equals the functional minimum data rate increased by the measured offset.

10. The method according to one of claims 1 to 9, wherein the scheduler (100) determines each transitory target bitrate (520, 521, 522) lower than or equaling the best effort bitrate increased by the measured offset.

11. The method according to one of claims 1 to 10, wherein the scheduler (100) determines the target bitrate (52) as an output bitrate of a virtual queue defined by the scheduler (100).

12. The method according to one of claims 1 to 11, wherein determining the best effort bitrate (50) comprises assigning a priority to the transmitted data packets (40), allocating spectral resources to the wireless connection (20) corresponding to the assigned priority and determining a priority bitrate (51) dependent on the allocated spectral resources and on radio conditions of the wireless connection (20).

13. An access point (10) for a radio access network, RAN, comprising a computing device executing a scheduler (100) configured for carrying out a method according to one of claims 1 to 12 together with a distributed real-time application (4).

14. A radio access network, RAN, comprising an access point (10) according to claim 13.

15. A computer program product, comprising a digital storage media with a program code, the program code causing a computing device to operate a scheduler (100) cooperating with a distributed real-time application (4) in a method according to one of claims 1 to 12 when being executed by a processor of the computing device.
